# EUROPÄISCHE PATENTANMELDUNG

(11) **EP 1 902 883 A2**
(43) Veröffentlichungstag der Anmeldung: **26.03.2008**
(21) Anmeldenummer: 07018525.1
(22) Anmeldetag: 20.09.2007
(51) Int. Cl.: B60J 5/10

(54) **Tür für den Kastenaufbau eines Kraftfahrzeugs**

(30) Priorität: 20.09.2006 DE 102006044712
(71) Anmelder: PWP SA, CH-1530 Payerne (CH)
(72) Erfinder: Gijsbers, Erik, 3232 Ins (CH)
(74) Vertreter: Füssel, Michael

(57) **Zusammenfassung**

Die vorliegende Erfindung betrifft eine Tür für den Kastenaufbau eines Kraftfahrzeugs, welche in Rahmenbauweise mit einer Türfüllung erstellt ist.

Wesentlich ist die Befestigung aller Türbeschlagteile in Längsbereichen hinterschnittener Nuten an dem Türrahmen.

## Beschreibung

Die vorliegende Erfindung betrifft die Tür für den Kastenaufbau eines Kraftfahrzeugs.

Derartige Türen sollen in Rahmenbauweise erstellt werden.

Der Rahmen dient dem Zweck, Türbeschlagteile zu befestigen und nimmt in dem vom Rahmen umschlossenen Bereich auch die Türfüllung auf.

Dabei soll der Rahmen aus einzelnen Profilstäben zusammengesetzt sein, die zweckmäßigerweise über Eck miteinander verbunden sind.

Aufgabe der Erfindung ist es, eine derartige Tür in Rahmenbauweise zu schaffen, die aus einfachen Profillängen hergestellt werden kann und die dennoch einen erhöhten Gebrauchswert bietet.

Diese Aufgabe löst die Erfindung mit den Merkmalen des Hauptanspruchs.

Wesentlich ist, dass die einzelnen Profilstäbe, aus denen der Rahmen zusammengesetzt ist, von außen zugängliche hinterschnittene Nutbereiche aufweisen, die mit in die Nutbereiche eingelegten Klemmstücken zusammenwirken, so dass dann entsprechend kongruent ausgestaltete Türbeschlagteile dort auf einfache Weise befestigt werden können.

Unter Türbeschlagteilen sind hier Eckverbinder, Achsenträger, Scharniere, Türverschlußhebel oder ähnliches zu verstehen, die für derartige Türen bekannterweise notwendig sind.

Die Befestigung dieser Türbeschlagteile soll allerdings in den hinterschnittenen Nutbereichen erfolgen, so dass prinzipiell über ein und dieselbe Befestigungsmethode rundum am Rahmen jedes beliebige Türbeschlagteil befestigbar ist.

Darüber hinaus weist der zusammengesetzte Rahmen an den einzelnen Profilstäben vorgesehene nach innen gerichtete Befestigungsvorrichtungen auf, die also in den vom Rahmen umschlossenen Flächenbereich hineinweisen, an denen die Türfüllung auf geeignete Weise, z.B. durch Klemmsitz, zu befestigen ist.

Zweckmäßigerweise erfolgt dies durch zwei Parallelschenkel der einzelnen Profilstäbe, deren lichter Abstand so bemessen ist, dass eine Türfüllung dort klapperfrei eingeschoben werden kann.

Sieht man die Profilstäbe als Endlosprofil vor, bietet es sich an, die hinterschnittenen Nutbereiche über die gesamte Länge des Profils vorzusehen, so dass dann die Profilstäbe bedarfsgerecht abgelängt werden können, ohne dass auf die nachträgliche Positionierung der Türbeschlagteile bereits beim Ablängen der Profilstäbe geachtet werden muss.

Die Verwendung ein und desselben Profils für alle Profilstäbe bietet den Vorteil eines gefälligen Aussehens und vermindert den Aufwand an Lagerhaltung.

Dank der hinterschnittenen Nut lassen sich die einzelnen Profilstäbe für die Erstellung des Türrahmens an den Ecken auf Gehrung schneiden.

In diesem Fall genügt für die Verbindung der Profilstäbe an den auf Gehrung geschnittenen Ecken prinzipiell ein einziger 90° Winkel aus Stahl, der in Verbindung mit entsprechenden Hintergreifplatten, die als sogenannte Klemmstücke in den hinterschnittenen Nutbereichen sitzen, dann die Türecken zuverlässig und millimetergenau miteinander verbindet.

Sieht man darüberhinaus vor, die hinterschnittenen Nutbereiche, die beim fertigen Türrahmen nach außen gerichtet offen sind, durch entsprechende Abdeckprofile zu verdecken, bietet es sich an, an den einzelnen Profilstäben nach außen weisende Befestigungsbereiche vorzusehen, an denen die Abdeckleisten dann zu befestigen sind.

Eine geeignete Möglichkeit ist die Ausbildung der Befestigungsbereiche in Form von Klipsleisten, die mit an den Abdeckleisten vorgesehenen komplementären Klipsleisten zusammenwirken.

Dabei kommt es im Hinblick auf die gesetzlich zulässigen Längen- und Breitenabmessungen derartiger Kastenaufbauten an Kraftfahrzeugen, insbesondere an Lastkraftfahrzeugen nicht darauf an, dass die Abdeckleisten im Bereich von ihren außen sichtbaren Ecken tatsächlich auch rechtwinklig ausgebildet sind.

Die Ausbildung von Abdeckleisten, die nach außen konvex abgerundet sind, fördert ein gefälliges Aussehen der Tür.

Zu diesem Zweck sollen die Abdeckleisten zwei sich unter 90° erstreckende Leistenschenkel aufweisen, an deren Enden die komplementären Klipsleisten sitzen, während die Profilstäbe sich mit den Leistenschenkeln komplementär zu einem rechteckförmigen Querschnitt ergänzende Stabschenkel besitzen, an deren Enden die Befestigungsbereiche sitzen.

Insgesamt wird daher bei einem Verklipsen der Abdeckleisten mit den einzelnen Profilstäben ein bezüglich des Rahmens abgerundetes Gesamtprofil erzeugt, welches letztlich dank verminderter Verletzungsgefahr auch der Verkehrssicherheit dient.

Die hinterschnittenen Nutbereiche der einzelnen Profilstäbe dienen, wie gesagt, der Befestigung von Türbeschlagteilen.

Insofern bietet es sich an, die in Einbaustellung der Tür vertikal verlaufenden äußeren Profilstäbe zur Befestigung der Türscharniere zu verwenden.

Die Türscharniere werden dann in den hinterschnittenen Nutbereichen dieser Profilstäbe durch entsprechende Hintergreifplatten bzw. Klemmstücke befestigt.

Hieraus entsteht ein weiterer Vorteil der Erfindung, weil die Verwendung von sogenannten 270° Scharnieren möglich ist, mit deren Hilfe die Tür aus dem geschlossenen Zustand soweit geöffnet werden kann, dass sie, im vollständig geöffneten Zustand, parallel zur Seitenwand des Kastenaufbaus liegt.

Wird zu diesem Zweck der Scharnierkörper zwischen der ersten Achse und der zweiten Achse entsprechend verkröpft, liegt die vollständig geöffnete Tür sogar hinter dem Heckrahmen des Kastenaufbaus und kann folglich beim Anfahren der Laderampen auch nicht mehr beschädigt werden.

Hierzu sind Ausführungsbeispiele angegeben.

Zusätzlich wird für diesen Fall vorgeschlagen, dass die Außenkonturen der Türscharniere entsprechend der Außenkontur der Abdeckleisten gestaltet sind, so dass die Türscharniere praktisch mit der Außenkontur der Abdeckleisten fluchten.

Vorteilhafterweise werden die Abdeckleisten senkrecht zu ihrer Längsrichtung entsprechend auf Länge geschnitten.

Zu diesem Zweck sollen die Türscharniere mit senkrecht zu den Scharnier-Drehachsen verlaufenden Anschlußflächen ausgebildet sein, die als Kontaktflächen an den Abdeckleisten anliegen.

Im folgenden wird die Erfindung anhand von Ausführungsbeispielen näher erläutert.

Es zeigen:
- Fig.1: ein erstes Ausführungsbeispiel der Erfindung
- Fig.2: ein Ausführungsbeispiel der Erfindung (Eckverbindung)
- Fig.3: ein Ausführungsbeispiel der Erfindung im Falzbereich einer zweiflügeligen Tür
- Fig.4: ein Ausführungsbeispiel der Erfindung im unteren Querbereich
- Fig.5: ein Ausführungsbeipiel der Erfindung mit angebrachten Türscharnieren
- Fig.6a - Fig.6c: ein Ausführungsbeipiel der Erfindung mit verkröpftem Scharnier in den möglichen Öffnungsstellungen
Sofern im folgenden nichts anderes gesagt ist, gilt die folgende Beschreibung stets für alle Figuren.

Die Figuren zeigen ganz oder teilweise eine Tür in Rahmenbauweise mit einer vom Rahmen 2 umschlossenen Türfüllung 4.

Eine derartige Tür ist zum Beispiel als Hecktür für den Kastenaufbau eines Kraftfahrzeugs ausgebildet.

Der Rahmen 2 wird von einzelnen Profilstäben 3 gebildet, die über Eckverbindungen 5 miteinander verbunden sind.

Die Profilstäbe sind erfindungswesentlich einstückig ausgeführt und weisen sowohl eine hinterschnittene Längsnut 6 auf als auch zwei parallele Laschen, die vom Boden 28 der hinterschnittenen Längsnut 6 ausgehen und deren lichter Innenabstand der Dicke der Türfüllung 4 im Sinne einer Klemmpassung entspricht.

Es entsteht auf diese Weise eine Tür, einflügelig oder zweiflügelig, von rechteckförmigem Grundriss, die von dem umgebenden Rahmen 2 stabilisiert wird und in ihrem Innenbereich mit einer entsprechenden Türfüllung 4 ausgestattet ist.

Wesentlich ist, dass an den einzelnen Profilstäben 3 in der jeweiligen Längsrichtung verlaufende von außen zugängliche hinterschnittene Nutbereiche 6 vorgesehen sind, die mittels hintergreifender Klemmstücke 8 zur Befestigung von Türbeschlagteilen dienen.

Zu diesem Zweck weist die hinterschnittene Nut 6 sich gegenüber liegende Klemmstege 7 auf, hinter denen die Klemmstücke 8 einmal von außen in die hinterschnittene Nut 6 eingeführt, so plaziert werden, dass die entsprechenden Türbeschlagteile dann über Klemmschrauben 9 an den Klemmstegen 7 angeklemmt werden können.

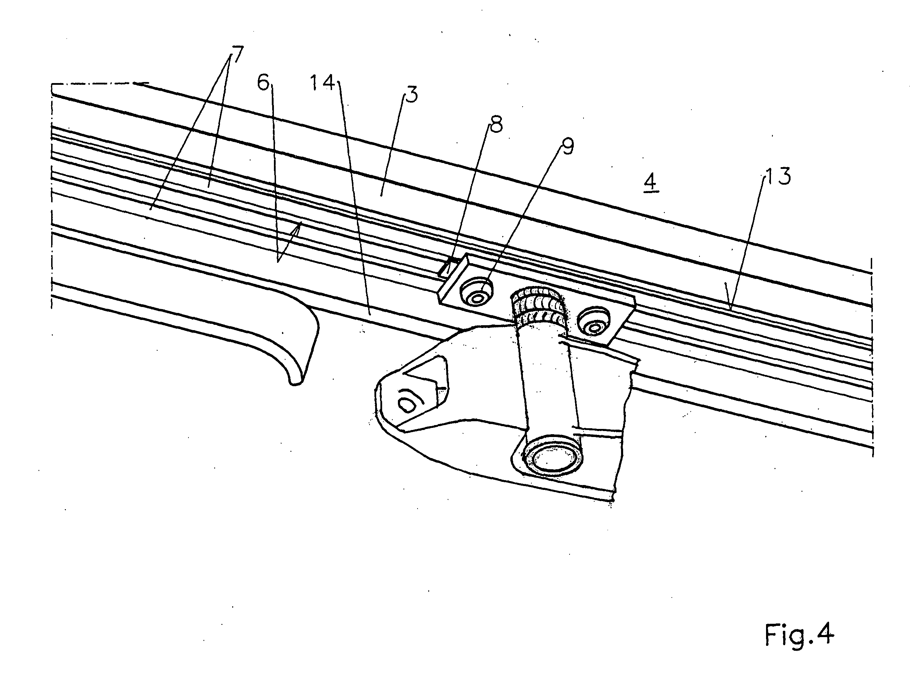

Wie beispielsweise Fig.4 zeigt, kann ein Verschlußmechanismus für die Tür 1 an jeder beliebigen Querposition eines unteren Profilstabes mit Hilfe der Klemmstege 7, des dahinter liegenden Klemmstückes 8 und entsprechender Klemmschrauben 9 befestigt werden.

Dies gilt in gleichem Maße für alle anderen denkbaren Türbeschlagteile.

Auf die Besonderheit bei Türscharnieren 19 wird noch eingegangen werden.

Ergänzend weisen die einzelnen Profilstäbe neben den hinterschnittenen Nutbereichen auch noch nach innen, das heißt in die Großfläche hinein gerichtete Befestigungsvorrichtungen 10 auf, an denen die Türfüllung 4 befestigbar ist.

Hier handelt es sich um zwei sich gegenüber liegende Laschen der einzelnen Profilstäbe 3, deren Querabstand so bemessen ist, dass eine Türfüllung dort wackelfrei eingeklemmt werden kann.

Handelt es sich, wie hier, um Profilstäbe, die praktisch im Endlosverfahren gezogen sind, können die hinterschnittenen Nutbereiche über die gesamte Länge jedes einzelnen Profilstabs verlaufen und ebenso die Befestigungsvorrichtungen.

Dies bietet den Vorteil einer praktisch individuellen Festlegung jedes einzelnen Türbeschlagteils nach Bedarf.

Insbesondere zeigen die Figuren auch die Verwendung von Profilstäben 3 ein und desselben Profils für alle Rahmenteile.

Ergänzend hierzu zeigt u.a. Fig.2 ein Ausführungsbeispiel, bei welchem die einzelnen Profilstäbe an einer Rahmenecke auf Gehrung geschnitten wird.

Zur Verbindung der einzelnen Profilstäbe dient hier ein 90°-Stahlwinkel, der über entsprechende Klemmschrauben 9 in - hier nicht sichtbare - hintergreifenden Platten an jedem einzelnen Profilstab 3 befestigt ist, und auf diese Weise eine stabile Rahmenecke der Tür bildet.

Zusätzlich weisen die Profilstäbe 3 nach außen weisende Befestigungsbereiche 11 auf, die der Befestigung von Abdeckleisten 12 dienen.

Diese Abdeckleisten 12 dienen unter anderem dem Zweck, die nach außen offenen Bereiche der hinterschnittenen Nut 6 abzudecken und der Tür 1 auf diese Weise ein formschönes Äußeres zu verleihen.

Die Befestigungsbereiche 11 sind hier als Klipsleisten 13, 14 ausgebildet, die mit komplementär ausgebildeten Klipsleisten der Abdeckleisten 12 zusammenwirken.

Es handelt sich hier also um eine Klipsverbindung, die zwischen den Abdeckleisten 12 und den Profilstäben 3 besteht, und die durch hintergreifende Zonen innerhalb der Elastizität der beteiligten Materialien zu einer Klipsverbindung führt.

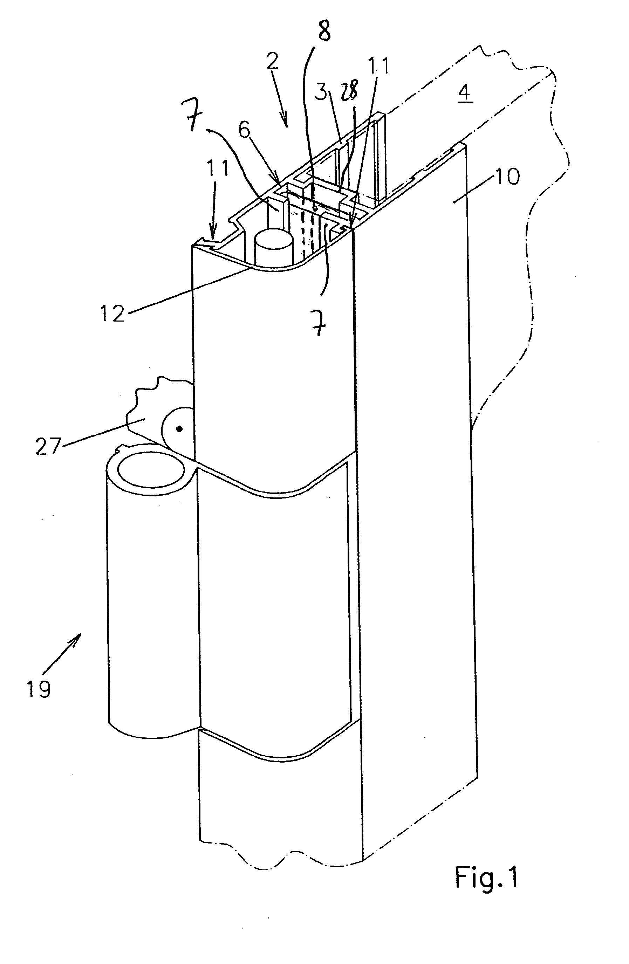

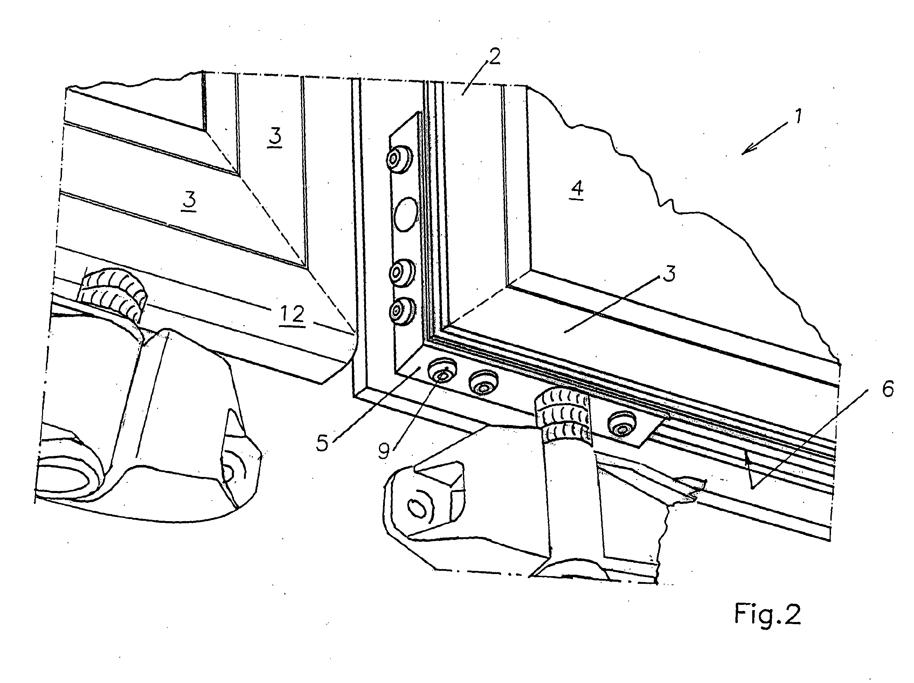

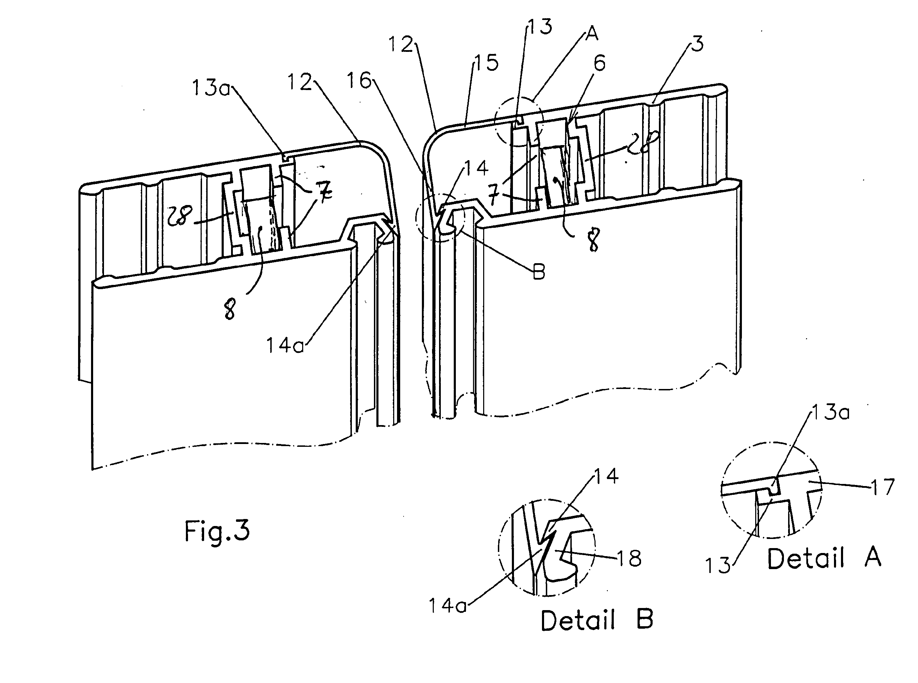

Insbesondere Figuren 1, 2, 3 und 5 zeigen Ausführungsbeispiele, bei welchen die Abdeckleisten 12 nach außen konvex ausgerundet sind.

Damit wird unter anderem dem Erfordernis Rechnung getragen, dass nach außen gerichtete Kraftfahrzeugteile möglichst so gestaltet werden sollen, dass Verletzungsgefahren gering bleiben.

Die Abdeckleisten weisen hier zwei sich unter 90° erstreckende Leistenschenkel 15, 16 auf, an deren Enden die komplementären Klipsleisten 13a, 14a sitzen während die Profilstäbe jeweils hierzu komplementäre Stabschenkel 17, 18 aufweisen, an deren Enden die Befestigungsbereiche 11 sitzen.

Die Gesamtkontur zwischen den Leistenschenkeln 15, 16 und den Stabschenkeln 17, 18 ist so gewählt, dass diese sich bis auf die gegebenenfalls nach außen konvex ausgerundeten Zonen der Abdeckleisten 12 zu einem im wesentlichen rechteckförmigen Querschnitt ergänzen, so dass der Rahmen 2 der Tür als von außen geschlossen erscheint.

Zusätzlich zeigen insbesondere Figuren 1 und 5 sowie 6a bis c eine Weiterbildung, bei welcher in den hinterschnittenen Nutbereichen 6 der äußeren vertikal verlaufenden Profilstäbe 3 die Türscharniere 19 befestigt sind.

Die Befestigung der Türscharniere 19 erfolgt auf die oben beschriebene Weise mit Hintergreifplatten in der hinterschnittenen Nut 6.

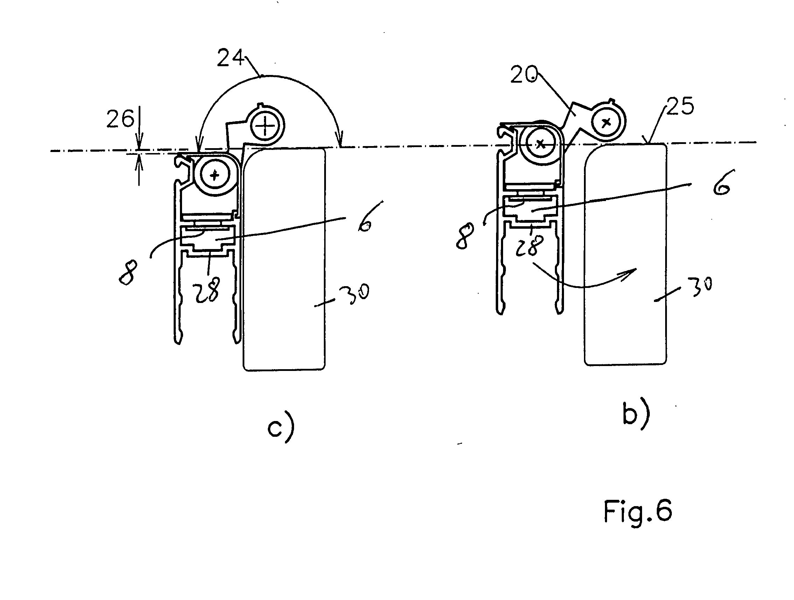

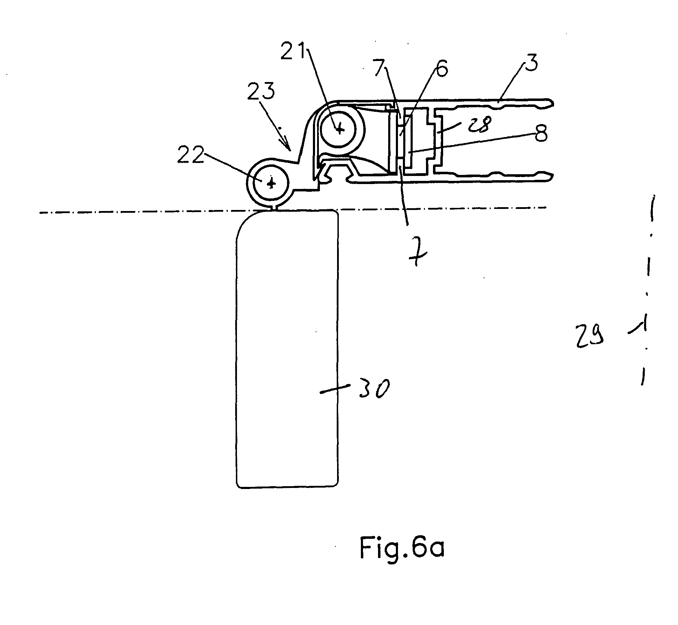

Es handelt sich hier, wie insbesondere Figuren 6a bis c zeigen, um sogenannte 2-Achsenscharniere, deren Öffnungswinkel ≧ 270° ist, vorzugsweise > 270°.

Die erste Achse 22 liegt gemäß Fig. 6a in der Ebene der Seitenwand des Kastenaufbaus während die zweite Achse seitlich außerhalb der hinterschnittenen Nutbereiche 6 des Rahmens 2 der Tür 1 angeordnet ist, und zwar zur Fahrzeugmitte 19 gewandt.

Wie insbesondere Figuren 6a bis c zeigen, ist der Scharnierkörper 20 zwischen erster Achse 21 und zweiter Achse 22 so verkröpft, dass die Tür in der vollständig geöffneten Stellung um etwas mehr als 270° verdreht ist, während der Scharnierkörper um etwas mehr als 180° verdreht ist.

Dabei liegt die verkröpfte Zone 23, die praktisch in der geschlossenen Stellung der Tür 1 einen Winkel bildet, in der vollständig geöffneten Stellung der Tür so, dass die Seitenwand 30 mit ihrer äußeren Ecke in der verkröpften Zone liegt.

Der verkröpfte Bereich 23 ermöglicht daher eine Verlagerung der Tür 1 in der vollständig geöffneten Stellung (siehe Fig.6c) so, dass diese mit ihrer zur Rückseite des Kraftfahrzeugs weisenden Kante hinter dem Heckrahmen 25 um einige wenige Millimeter zurückspringt.

Im gezeigten Ausführungsbeispiel handelt es sich um etwa 2 bis 5 Millimeter Rücksprung 26.

Diese Maßnahme bietet daher den Vorteil, dass beim Rückwärtssetzen des Kraftfahrzeugs zum Beispiel an die Laderampe zunächst einmal der Heckrahmen 25 an der Laderampe anstößt und nicht die nach hinten weisende Kante der Tür 1.

Dabei kann ein Öffnungswinkel 24 von etwas mehr als 270° von Vorteil sein.

Zu diesem Zweck ist der verkröpfte Bereich 23 entsprechend anzupassen.

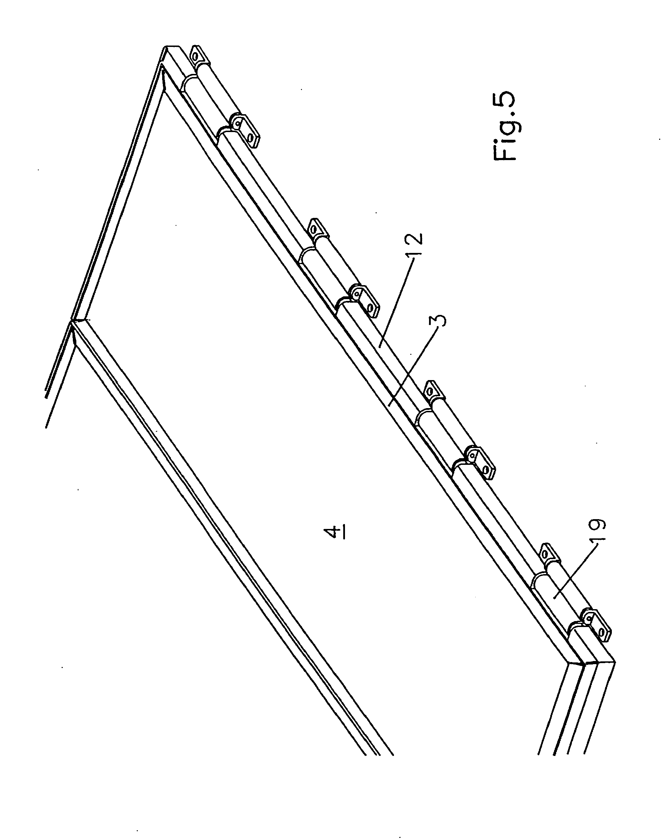

Darüber hinaus zeigen insbesondere Figuren 1 und 5 eine Weiterbildung, bei welcher die Außenkontur der Türscharniere 19 an die Außenkontur der Abdeckleisten 12 angepaßt ist.

Es entsteht auf diese Weise eine vertikal durchgehende Konturfläche an den Außenrahmenprofilen jeder Tür 1.

Die Abdeckleisten 12 können bei dieser Weiterbildung aus senkrecht zur Längsrichtung abgeschnittenen Profilen bestehen, sofern die entsprechenden Kontaktflächen der Türscharniere 19 ebenfalls senkrecht zur Längsrichtung ausgestaltet sind.

Es entstehen hier senkrechte Kontaktflächen 27 zwischen den Scharnierkörpern 20 des Türscharniers 19 und den abgelängten Stücken der einzelnen Abdeckleisten 12.

### Bezugszeichenaufstellung

- 1: Tür
- 2: Rahmen
- 3: Profilstab
- 4: Türfüllung
- 5: Eckverbindung
- 6: hinterschnittene Nut
- 7: Klemmsteg
- 8: Klemmstück
- 9: Klemmschraube
- 10: Befestigungsvorrichtung für 4
- 11: nach außen weisender Befestigungsbereich
- 12: Abdeckleiste
- 13: erste Klipsleiste
- 13a: erste komplementäre Klipsleiste
- 14: zweite Klipsleiste
- 14a: zweite komplementäre Klipsleiste
- 15: erster Leistenschenkel
- 16: zweiter Leistenschenkel
- 17: erster Stabschenkel
- 18: zweiter Stabschenkel
- 19: Türscharnier
- 20: Scharnierkörper
- 21: erste Achse
- 22: zweite Achse
- 23: verkröpfter Bereich
- 24: Öffnungswinkel
- 25: Heckrahmen
- 26: Rücksprung
- 27: senkrechte Kontaktfläche
- 28: Boden von 6
- 29: Fahrzeugmitte
- 30: Seitenwand

## Patentansprüche

1. Tür (1) in Rahmenbauweise (2) mit rahmenumschlossener Türfüllung (4) für den Kastenaufbau eines Kraftfahrzeugs, wobei der Rahmen (2) aus einzelnen Profilstäben (3) zusammengesetzt ist, die über Eck (5) miteinander verbunden sind und an denen in der jeweiligen Längsrichtung verlaufende von außen zugängliche hinterschnittene Nutbereiche (6) vorgesehen sind, die mittels hintergreifender Klemmstücke (8) zur von außen zugänglichen Befestigung (7, 9) von Türbeschlagteilen dienen und an denen nach innen gerichtete Befestigungsvorrichtungen (10) vorgesehen sind, an denen die Türfüllung (4) befestigbar ist.

2. Tür (1) nach Anspruch 1, **dadurch gekennzeichnet, dass** die hinterschnittenen Nutbereiche (6) über die gesamte Länge jedes einzelnen Profilstabs (3) von Ecke zu Ecke verlaufen.

3. Tür (1) nach Anspruch 1 oder 2, **dadurch gekennzeichnet, dass** für alle Rahmenteile Profilstäbe (3) desselben Profils verwendet sind.

4. Tür (1) nach einem der Ansprüche 1 bis 3, **dadurch gekennzeichnet, dass** die Profilstäbe (3) über Eck auf Gehrung geschnitten sind.

5. Tür (1) nach einem der Ansprüche 1 bis 4, **dadurch gekennzeichnet, dass** die Profilstäbe (3) nach außen weisende Befestigungsbereiche (11) aufweisen, an denen Abdeckleisten (12) anbringbar sind.

6. Tür (1) nach Anspruch 5, **dadurch gekennzeichnet, dass** die Befestigungsbereiche (11) als Klipsleisten (13, 14) ausgebildet sind und dass die Abdeckleisten (12) die komplementären Klipsleisten (13a, 14a) aufweisen.

7. Tür (1) nach Anspruch 5 oder 6, **dadurch gekennzeichnet, dass** die Abdeckleisten (12) nach außen konvex ausgerundet sind.

8. Tür (1) nach einem der Ansprüche 5 bis 7, **dadurch gekennzeichnet, dass** die Abdeckleisten (12) zwei sich unter 90° erstreckende Leistenschenkel (15, 16) aufweisen, an deren Enden die komplementären Klipsleisten (13a, 14a) sitzen und dass die Profilstäbe (3) sich mit den Leistenschenkeln (15, 16) komplementär zu einem rechteckförmigen Querschnitt ergänzende Stabschenkel (17, 18) aufweisen, an deren Enden die Klipsleisten (13, 14) sitzen.

9. Tür (1) nach einem der Ansprüche 1 bis 8, **dadurch gekennzeichnet, dass** in den hinterschnittenen Nutbereichen (6) der äußeren vertikal verlaufenden Profilstäbe (3) die Türscharniere (19) befestigt sind.

10. Tür (1) nach Anspruch 9, **dadurch gekennzeichnet, dass** die Türscharniere (19) als 2-Achsenscharniere mit einem Türöffnungswinkel ≧ 270° ausgebildet sind, deren erste Achse (21) in der Ebene der Seitenwand des Kastenaufbaus liegt und deren zweite Achse (22) seitlich außerhalb der hinterschnittenen Nutbereiche (6) des Türrahmens (2) liegt.

11. Tür (1) nach Anspruch 10, **dadurch gekennzeichnet, dass** der Scharnierkörper (20) zwischen erster Achse (21) und zweiter Achse (22) so verkröpft (23) ist, dass er in der vollständig geöffneten Stellung der Tür um einen Öffnungswinkel (24) von etwas mehr als 270° verschwenkt ist.

12. Tür (1) nach Anspruch 11, **dadurch gekennzeichnet, dass** die Außenkante der Tür in der vollständig geöffneten Stellung hinter dem Heckrahmen (25) zurückspringt (26).

13. Tür (1) nach Anspruch 12, **dadurch gekennzeichnet, dass** der Rücksprung (26) lediglich nur einige wenige Millimeter beträgt.

14. Tür (1) nach einem der Ansprüche 9 bis 13 in Verbindung mit den Merkmalen eines der Ansprüche 7 oder 8, **dadurch gekennzeichnet, dass** die Außenkontur der Türscharniere (19) im Einbauzustand mit der Außenkontur der Abdeckleisten (12) fluchtet.

15. Tür (1) nach Anspruch 14, **dadurch gekennzeichnet, dass** die Abdeckleisten (12) an den Türscharnieren (19) und die Türscharniere (19) an den Abdeckleisten (12) in senkrecht zur Drehachse liegenden Kontaktflächen (27) gegenseitig anstoßen.

16. Tür (1) nach Anspruch 15, **dadurch gekennzeichnet, dass** die Profilstäbe einstückig ausgebildete Strangpressprofile sind.

17. Tür (1) nach Anspruch 1 bis 16, **dadurch gekennzeichnet, dass** die Befestigungsvorrichtungen 10 von parallelen Laschen gebildet werden, deren lichter Abstand der Dicke der Türfüllung (4) entspricht im Sinne einer Klemmpassung und die sich, ausgehend von den hinterschnittenen Nutbereichen (6), von deren Boden (28) ausgehend erstrecken.
